# EUROPEAN PATENT APPLICATION

(11) **EP 2 442 257 A1**
(43) Date of publication of application: **18.04.2012**
(21) Application number: 09845699.9
(22) Date of filing: 25.08.2009
(51) Int. Cl.: G06K 9/00, G06F 3/00

(54) **WRITING STROKE IDENTIFICATION APPARATUS, MOBILE TERMINAL AND METHOD FOR REALIZING SPATIAL WRITING**

(30) Priority: 10.06.2009 CN 200910087137
(71) Applicant: ZTE Corporation, Shenzhen, Guangdong 518057 (CN)
(72) Inventor: ZHANG, Junbiao, Guangdong 518057 (CN)
(74) Representative: Charrier, Rapp & Liebau
(86) International application number: PCT/CN2009/073490
(87) International publication number: WO 2010/142090

(57) **Abstract**

A writing stroke recognition apparatus, a mobile terminal and a method for realizing spatial writing are provided. By acquiring and analyzing the writing movement amount information, the present invention utilizes the preset corresponding relationship between the movement amount information and stroke information, and the preset corresponding relationship between the movement amount information and the stroke relative position information, to obtain the writing stroke information and the writing relative position information. Further, the present invention recognizes the corresponding character by using the obtained writing stroke information and the writing relative position information.

## Description

### Field of the Invention

The present invention relates to a human-machine interface interaction technology of a mobile terminal, and specifically, to a writing stroke recognition apparatus, a mobile terminal and a method for realizing spatial writing.

### Background of the Invention

Currently, human-machine interfaces contained in a mobile terminal such as a mobile phone comprise keyboard input, handwriting input, voice input, fingerprint input, and etc, wherein the most commonly used human-machine interfaces for inputting characters (letters) are the keyboard input and the handwriting input. At present, a manner of the handwriting input is to move a touch pen on a touch screen, and the touch screen acquires variation amounts of resistance by an analog-to-digital (A/D), and then positions the coordinates of contact points in a planar range of a defined area. This manner is of a high recognition rate and is the mainstream of current handwriting inputs. However, current handwriting input manners require two hands of an operator to perform the operation.

### Summary of the Invention

Considering the problem in the prior art that the handwriting input manner requires both hands of an operator to perform the operation simultaneously, the present invention provides a writing stroke recognition apparatus, a mobile terminal and a method for realizing spatial writing, to solve at least one of the above problems.

To achieve the above purpose, according to one aspect of the present invention, a writing stroke recognition apparatus is provided.

The writing stroke recognition apparatus according to the present invention comprises an acquiring module, a stroke recognition module, and a storage module configured to store a corresponding relationship between movement amount information and stroke information, wherein the acquiring module is configured to acquire movement amount information of the movement of the writing stroke recognition apparatus per se, and output the movement amount information to the stroke recognition module; and the stroke recognition module is configured to obtain stroke information corresponding to the acquired movement amount information according to the corresponding relationship stored in the storage module.

Preferably, the storage module is further configured to store corresponding relationship between the movement amount information and stroke relative position information; the writing stroke recognition apparatus further comprises a selection module and a stroke relative position recognition module, wherein the selection module is configured to output the movement amount information from the acquiring module to the stroke recognition module or the stroke relative position recognition module, according to different control information; and the stroke relative position recognition module is configured to obtain stroke relative position information corresponding to the acquired movement amount information, according to the corresponding relationships stored in the storage module.

Preferably, the acquiring module is an acceleration sensor.

Preferably, the acceleration sensor is a triaxial acceleration sensor or a biaxial acceleration sensor.

Preferably, the selection module is a key-press, wherein pressing or releasing the key-press indicates different control information.

In order to achieve the above purpose, according to another aspect of the present invention, a mobile terminal is provided.

The mobile terminal according to the present invention at least comprises a writing stroke recognition apparatus and a character recognition unit, wherein the writing stroke recognition apparatus comprises an acquiring module, a stroke recognition module, and a storage module configured to store a corresponding relationship between movement amount information and stroke information, wherein the acquiring module is configured to acquire movement amount information of the movement of the writing stroke recognition apparatus per se, and output the movement amount information to the stroke recognition module; the stroke recognition module is configured to obtain stroke information corresponding to the acquired movement amount information according to the corresponding relationships stored in the storage module; and the character recognition unit is configured to make transformation and obtain a corresponding character according to the stroke information received.

Preferably, the storage module is further configured to store corresponding relationship between the movement amount information and stroke relative position information; the writing stroke recognition apparatus further comprises a selection module and a stroke relative position recognition module, wherein the selection module is configured to output the movement amount information from the acquiring module to the stroke recognition module or the stroke relative position recognition module, according to different control information; the stroke relative position recognition module is configured to obtain stroke relative position information corresponding to the acquired movement amount information according to the corresponding relationships stored in the storage module; and the character recognition unit is further configured to make transformation and obtain the corresponding character according to the stroke relative position information received.

Preferably, the acquiring module is an acceleration sensor.

Preferably, the acceleration sensor is placed at edges and corners of the mobile terminal.

Preferably, the selection module is a key-press, wherein pressing or releasing the key-press indicates different control information.

In order to achieve the above purpose, according to another aspect of the present invention, a method for realizing spatial writing is provided.

The method for realizing spatial writing according to the present invention presets a corresponding relationship between movement amount information and stroke information, and the method further comprises: obtaining movement amount information of a mobile terminal, and then obtaining stroke information according to the preset corresponding relationship and the obtained movement amount information; and performing character recognition using the obtained stroke information.

Preferably, the preset corresponding relationship further comprises corresponding relationship between the movement amount information and stroke relative position information, and the method further comprises: obtaining stroke relative position information according to the preset corresponding relationship and the obtained movement amount information; and further performing character recognition using the obtained stroke relative position information.

Preferably, the movement amount information represents the variation of an acceleration value within a period of time.

It can be seen from the above technical solutions provided by the present invention that writing stroke information and writing relative position information are obtained, by acquiring and analyzing the movement amount information of the writing and using the preset corresponding relationships between the movement amount information and the stroke information and the stroke relative position information, and then the corresponding characters are recognized using the obtained writing stroke information and the writing relative position information. By simple hardware circuits and effective corresponding relationships, the present invention guarantees accurate recognition of writing strokes, and can obtain the stroke information of the input characters conveniently and accurately, and realize character input function of the mobile terminal, and thus provides a simple and accurate handwriting output manner.

### Brief Description of the Accompanying Drawings

The accompanying drawings described herein are used to provide a further understanding of the present invention, and constitute a portion of the present application. The illustrative embodiments of the present invention and the explanations thereof are used to explain the present invention, and do not constitute inappropriate limitations on the present invention. In the accompanying drawings:
Fig. 1 is a construction schematic view of a writing stroke recognition apparatus according to an embodiment of the present invention;
Fig. 2 is a construction schematic view of a mobile terminal according to an embodiment of the present invention;
Fig. 3 is a flow chart of a method for realizing spatial writing according to an embodiment of the present invention;
Fig. 4a is a schematic view illustrating that x-axis acceleration varies over time during writing a horizontal stroke;
Fig. 4b is a schematic view illustrating that y-axis acceleration varies over time during writing a horizontal stroke;
Fig. 5a is a schematic view illustrating that x-axis accelerating section varies over time during writing a vertical stroke;
Fig. 5b is a schematic view illustrating that y-axis accelerating section varies over time during writing a vertical stroke; and
Fig. 6 is a schematic view of an embodiment of writing stroke recognition.

### Detailed Description of the Embodiments

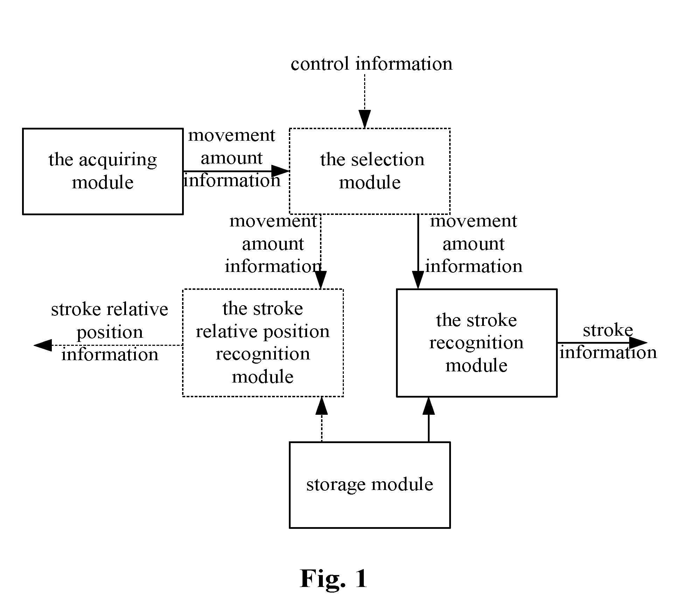

Fig. 1 is a construction schematic view of a writing stroke recognition apparatus according to an embodiment of the present invention. As shown in Fig. 1, the writing stroke recognition apparatus comprises an acquiring module, a stroke recognition module, and a storage module configured to store a corresponding relationship between movement amount information and stroke information.

In the above, the acquiring module is configured to acquire movement amount information of a movement of the writing stroke recognition apparatus per se, and output the movement amount information to the stroke recognition module.

The acquiring module can acquire an acceleration value in a spatial direction of the writing stroke recognition apparatus per se by adopting an acceleration sensor, wherein the acceleration value is the movement amount information of the movement of the writing stroke recognition apparatus per se.

The acceleration sensor can only measure the acceleration, i.e., the acceleration comes from the movement (the movement should not be at a uniform speed, and generally, this requirement can be satisfied). If the movement is made from left to right, the x-axis acceleration has a positive value, and otherwise the x-axis acceleration has a negative value; and if the movement is made from up to down, the y-axis acceleration has a positive value, and otherwise the y-axis acceleration has a negative value (note: when the chip moves toward the same direction, the value of the acceleration output has the unchanged sign (positive or negative), and only when the chip moves toward the opposite direction, the sign is changed, which is different from the understanding of the acceleration symbol in physics field). The acceleration sensor can be a triaxial acceleration sensor or a biaxial acceleration sensor. Taking the triaxial acceleration sensor as the example, it can measure the accelerations in three coordinate axis directions by referring to a planar direction of an acceleration sensor chip. When an apparatus embedded with the acceleration sensor chip moves, the acceleration sensor chip will output values of the accelerations in the three axis directions based on the coordination system, and the track of the moving point can be determined uniquely by coordinate vector combination.

The acceleration sensor belongs to a common chip for those skilled in the art, and the specific implementing principle and the use thereof can be learned by referring to product information of chips of different types, which are not covered in the protection scope of the present invention, and are not used to limit the protection scope of the present invention either. Therefore, the details are omitted herein. In order to obtain high sensitivity, the acceleration sensor chip can be arranged at an edge of a printing circuit board.

The stroke recognition module is configured to obtain stroke information corresponding to the acquired movement amount information according to the corresponding relationship stored in the storage module.

By using the writing stroke recognition apparatus of the present invention, a user can set a corresponding relationship between a specific movement action (represented by movement amount information) and a specific operation (represented by stroke information). For example, when a movement track is "O", by acquiring the movement amount information of the writing stroke recognition apparatus within any spatial range, it is obtained that the stroke information is a circle, which represents an unlocking operation. Also, when a movement track is "L", by acquiring the movement amount information of the writing stroke recognition apparatus within any spatial range, it is obtained that the stroke information is an "L", which represents an operation of dialing a specific telephone number. As another example, when a movement tract is "Z", by acquiring the movement amount information of the writing stroke recognition apparatus within any spatial range, it is obtained that the stroke information is a "Z", which represents an operation of entering a photographing mode. Also, when a movement track is an "R", by acquiring the movement amount information of the writing stroke recognition apparatus within any spatial range, it is obtained that the stroke information is an "R", which represents an operation of turning on the radio. Furthermore, when a movement track is a "C", by acquiring the movement amount information of the writing stroke recognition apparatus within any spatial range, it is obtained that the stroke information is a "C", which represents an operation of selecting the channel of the radio, and etc. It should be noted that the corresponding relationships between the above specific movement and the specific operation can be set arbitrarily, and the embodiments of the present invention will not make any limitation on the corresponding relationships.

When the writing stroke recognition apparatus of the present invention is used for performing character recognition, the storage module is further configured to store a corresponding relationship between the movement amount information and stroke relative position information.

The writing stroke recognition apparatus further comprises a selection module and a stroke relative position recognition module.

In the above, the selection module is configured to output the movement amount information from the acquiring module to the stroke recognition module or the stroke relative position recognition module, according to different control information.

The generation of the control information can be achieved by a hardware manner. For example, it is achieved by a key-press, wherein when the key-press is pressed down, a control signal is used to switch-on the connection between the acquiring module and the stroke recognition module, i.e., the movement amount information output by the acquiring module is received by the stroke recognition module; and when the key-press is not pressed down (released), the control signal is used to switch-on the connection between the acquiring module and the stroke relative position recognition module, i.e., the movement amount information output by the acquiring module is received by the stroke relative position recognition module. It should be noted that the meaning of the control information corresponding to whether the key-press is pressed down or not can be set depending on the actual situations, and the description herein is only for an example. The sensitivity of the key-press in regard to the pressing force is adjustable, which belongs to common technical means for those skilled in the art. Therefore, the details are omitted herein.

The stroke relative position recognition module is configured to obtain stroke relative position information corresponding to acquired movement amount information according to the corresponding relationships stored in the storage module.

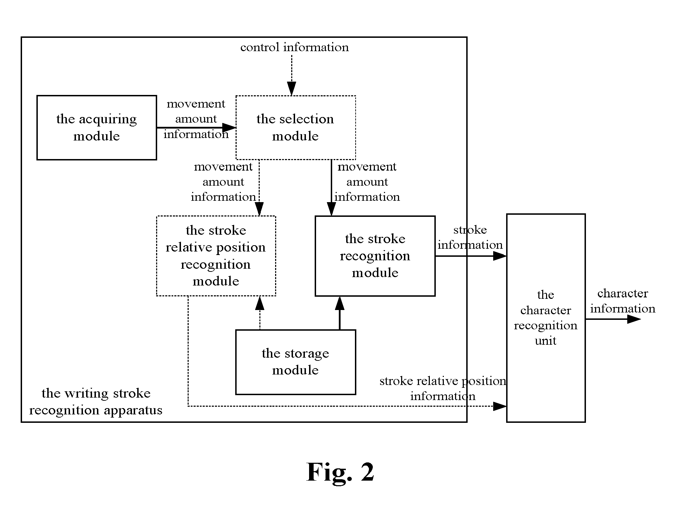

The writing stroke recognition apparatus as illustrated in Fig. 1 can be provided in a mobile terminal. Fig. 2 is a construction schematic view of a mobile terminal according to an embodiment of the present invention. As illustrated in Fig. 2, the writing stroke recognition apparatus serves as a constituting unit of the mobile terminal, which is used in combination with an existing character recognition unit in the mobile terminal to achieve the character input function of the mobile terminal, wherein existing character recognition unit is configured to make transformation and obtain the corresponding character according to the received stroke information, or the received stroke information and stroke relative position information. That is, the mobile terminal is used as a pen to write within any spatial range, and then through the acceleration sensor provided in the writing stroke recognition apparatus of the mobile terminal, the acceleration value of the mobile terminal in the spatial direction is acquired to determine the movement track of the mobile terminal, and the corresponding stroke information, or the stroke information and stroke relative position information are obtained through the acquired movement amount information; and finally, the purpose which is the same as the current handwriting input is achieved after a process by the character recognition unit of the mobile terminal.

In the practical implementation of the mobile terminal, in order to obtain higher sensitivity, preferably, the acceleration sensor in the writing stroke recognition apparatus can be arranged at edges and corners of the mobile terminal. Thus, the mobile terminal is just like a pen, and the acceleration sensor is the tip of the pen. When the mobile terminal is moved to write, the plane for writing is just a reference plane of the acceleration sensor.

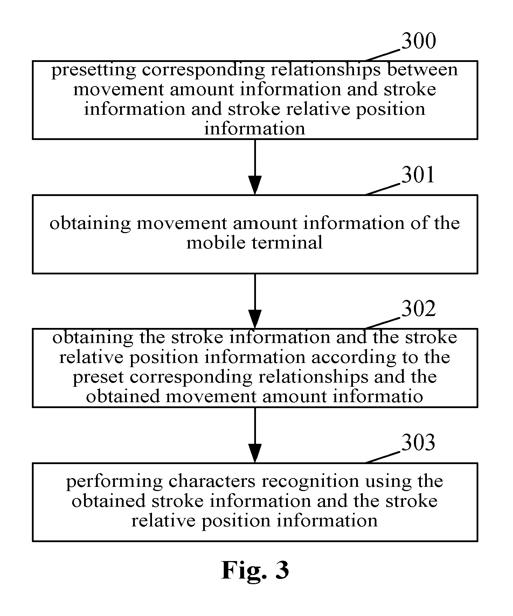

A method for realizing spatial writing according to the present invention is described in combination with Figs. 3 and 2 hereinafter.

Fig. 3 is a flow chart of a method for realizing spatial writing according to an embodiment of the present invention. As illustrated in Fig. 3, the method comprises the following steps.

Step 300, corresponding relationships between movement amount information and stroke information and stroke relative position information are preset. It should be noted that, if an apparatus for achieving character input function is only required to achieve some simple specific operations, then it is only necessary to preset a corresponding relationship between the movement amount information and the stroke information in the present step, which is described by taking the realization of character input as the example in Fig. 3.

Step 301, movement amount information of the mobile terminal is obtained.

The movement amount information can be represented by variation of acceleration value acquired by an acceleration sensor during a period of time. The period of time herein refers to the writing time. How to use the acceleration sensor to accomplish the acquisition of the movement amount information belongs to common technical means for those skilled in the art and the details are omitted herein. The corresponding relationship between the variation amount of the movement amount information and the stroke will be described in detail hereinafter.

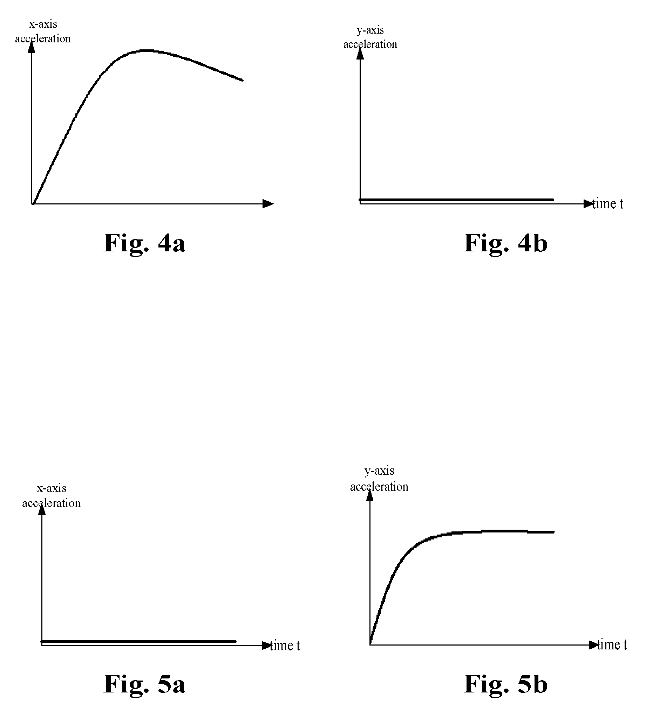

For example, when writing a horizontal stroke, the mobile terminal is moved from the left to the right, and it is supposed that the movement is a translation movement, the x-axis acceleration is positive, the y-axis acceleration is 0, and this state sustains for a period of time until the writing of the horizontal stroke is finished. The views of the variations of the x-axis acceleration and the y-axis acceleration over time are respectively illustrated in Fig. 4a and Fig. 4b, wherein Fig. 4a is a schematic view illustrating the variation of the x-axis acceleration over time during writing the horizontal stroke, and Fig. 4b is a schematic view illustrating the variation of the y-axis acceleration over time during writing the horizontal stroke. In Fig. 4a and Fig. 4b, the abscissa represents time and the ordinate represents the acceleration value. As shown in Fig. 4a, the value of the x-axis acceleration (i.e., the waveform represented by the thick line) will vary along with the variation of the movement speed, and will stay at the positive half axis of the x-axis in any way. Thus, it can be concluded that, when the state in which the x-axis acceleration is greater than 0 and the y-axis acceleration is near 0 (the y-axis acceleration approaches to 0) sustains for a period of time, it can be determined that the stroke being written is a horizontal stroke.

At this moment, if in the step 300, it is preset that the movement amount information is the x-axis acceleration > 0 and the y-axis acceleration being near 0 (the y-axis acceleration approaches to 0) which corresponds to the stroke information of a horizontal stroke, then in the present step, when the obtained movement amount information is that the x-axis acceleration > 0 and the y-axis acceleration is near 0, then it can be obtained that the information of the stroke being written is of a horizontal stroke according to the corresponding relationship.

Also, when writing a vertical stroke, the mobile terminal is moved from up to down, and it is supposed that the movement is a vertical movement, the x-axis acceleration is 0 and the y-axis acceleration is positive, and this state sustains for a period of time until the writing of the vertical stroke is finished. The views illustrating the variations of the x-axis acceleration and the y-axis acceleration over time are respectively illustrated in Fig. 5a and Fig. 5b, wherein Fig. 5a is a schematic view illustrating the variation of the x-axis accelerating section over time during writing the vertical stroke, and Fig. 5b is a schematic view illustrating the variation of the y-axis accelerating section over time during writing the vertical stroke. In Fig. 5a and Fig. 5b, the abscissa represents time and the ordinate represents the acceleration value. As shown in Fig. 5b, the acceleration value (i.e., the waveform represented by the thick line) will vary along with the variation of the movement speed, which is not unique, however the acceleration value will stay at the positive half axis of the y-axis in any way. Thus, it can be concluded that, when the state in which the x-axis acceleration is near 0 (the y-axis acceleration approaches to 0) and the y-axis acceleration is s greater than 0 sustains for a period of time, it can be determined that the stroke being written is a vertical stroke.

At this moment, if in step 300, it is preset that the movement amount information is the x-axis acceleration being near 0 (the y-axis acceleration approaches to 0) and the y-axis acceleration speed > 0, which corresponds to the stroke information of a vertical stroke, then in the present step, when the obtained movement amount information is that the x-axis acceleration is near 0 and the y-axis acceleration speed > 0, it can be obtained that the information of the stroke being written is a vertical stroke according to the corresponding relationship.

Thus, it can be easily concluded as the following:
when the state in which the x-axis acceleration < 0 and the y-axis acceleration > 0 sustains for a period of time, it can be obtained that the stroke being written is a left-falling stroke; when the state in which the x-axis acceleration > 0 and the y-axis acceleration > 0 sustains for a period of time, it can be obtained that the stroke being written is a right-falling stroke; and etc.

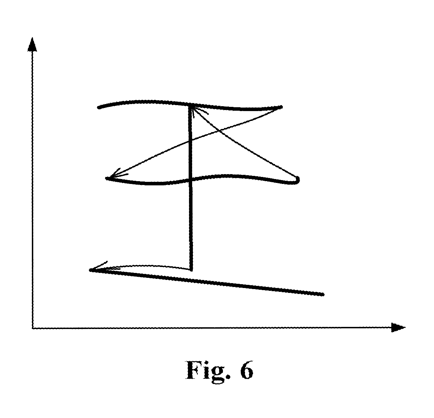

In practical application, a backward stroke may appear during writing characters. Fig. 6 is a schematic view of an embodiment of writing stroke recognition. As shown in Fig. 6, the strokes for writing the character " 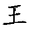 " are illustrated, wherein the thick lines represent the strokes of the characters " 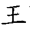 ", and the thin lines with arrow represent the backward stroke during writing the character " 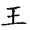 ". For example, when it is un-continuous between the ending of the first stroke and the starting of the second stroke, it is possible that the transition part (a backward stroke) between the ending of the first stroke and the starting of the second stroke would be deemed as a stroke. The present invention recognizes a backward stroke by controlling a key-press. For example, when the key-press is pressed, it is deemed that what is written is a stroke and the stroke information will be acquired; and when the key-press is not pressed, it is deemed that what is written is a backward stroke, and the stroke relative position information will be obtained after the acquisition.

The stroke relative position information is used to describe the relative position of two adjacent strokes. Also taking the writing of the character "" as an example, as for the position relationship between the first stroke and the second stroke, it can be judged according to the movement amount information of the backward stroke between the ending of the first stroke and the starting of the second stroke, and it is easily learned that the y-axis acceleration of the backward stroke is greater than 0, then it is obtained that there is an up and down relationship between the first stroke and the second stroke.

Step 302, the stroke information and the stroke relative position information are obtained according to the preset corresponding relationship and the obtained movement amount information.

The method for recognizing a Chinese character of the present invention is introduced by taking a simple character as an example. For a complex Chinese character, the division or the meaning transformation may be performed. For example, the meaning of a circular point "•" is transformed to be a "right-falling stroke" and etc., so as to continuously improve the corresponding relationships between the movement amount information and the stroke information and the stroke relative position information, thereby further improving the accuracy of character recognition.

Step 303, character recognition is performed using the obtained stroke information and the stroke relative position information.

This step can be achieved by existing character recognition function, which belongs to common technical means of those skilled in the art and then is omitted herein.

According to an embodiment of the present invention, a computer readable medium is further provided, which stores instructions executable for a computer. When the instructions are executed by the computer or a processor, the computer or the processor is made to execute the processes of the steps shown in Fig. 3. Preferably, one or more of the above embodiments can be executed.

With the technical solutions provided by the embodiments of the present invention, the stroke information of an input character can be obtained conveniently and accurately, and thus the character input function of the mobile terminal can be achieved.

In addition, the implementation of the present invention does not change any system architecture and current process flow, and then can be easily realized, and then can be conveniently popularized in the technical field and thus has high industrial applicability.

Described above are just preferred embodiments of the present invention, and are not intended to restrict the protection scope of the present invention. Any modifications, equivalent substitutions, improvements and etc. within the spirit and principle of the present invention, should be included in the protection scope of the present invention.

## Claims

1. A writing stroke recognition apparatus, **characterized by** comprising an acquiring module, a stroke recognition module, and a storage module configured to store a corresponding relationship between movement amount information and stroke information, wherein
the acquiring module is configured to acquire movement amount information of the movement of the writing stroke recognition apparatus per se, and output the movement amount information to the stroke recognition module; and
the stroke recognition module is configured to obtain stroke information corresponding to the acquired movement amount information according to the corresponding relationship stored in the storage module.

2. The writing stroke recognition apparatus according to claim 1, **characterized in that** the storage module is further configured to store corresponding relationship between the movement amount information and stroke relative position information;
the writing stroke recognition apparatus further comprises a selection module and a stroke relative position recognition module, wherein
the selection module is configured to output the movement amount information from the acquiring module to the stroke recognition module or the stroke relative position recognition module, according to different control information; and
the stroke relative position recognition module is configured to obtain stroke relative position information corresponding to the acquired movement amount information, according to the corresponding relationships stored in the storage module.

3. The writing stroke recognition apparatus according to claim 1 or 2, **characterized in that** the acquiring module is an acceleration sensor.

4. The writing stroke recognition apparatus according to claim 3, **characterized in that** the acceleration sensor is a triaxial acceleration sensor or a biaxial acceleration sensor.

5. The writing stroke recognition apparatus according to claim 2, **characterized in that** the selection module is a key-press, wherein pressing or releasing the key-press indicates different control information.

6. A mobile terminal, **characterized by** at least comprising a writing stroke recognition apparatus and a character recognition unit, wherein
the writing stroke recognition apparatus comprises an acquiring module, a stroke recognition module, and a storage module configured to store a corresponding relationship between movement amount information and stroke information, wherein
the acquiring module is configured to acquire movement amount information of the movement of the writing stroke recognition apparatus per se, and output the movement amount information to the stroke recognition module;
the stroke recognition module is configured to obtain stroke information corresponding to the acquired movement amount information according to the corresponding relationships stored in the storage module; and
the character recognition unit is configured to make transformation and obtain a corresponding character according to the stroke information received.

7. The mobile terminal according to claim 6, **characterized in that** the storage module is further configured to store corresponding relationship between the movement amount information and stroke relative position information;
the writing stroke recognition apparatus further comprises a selection module and a stroke relative position recognition module, wherein
the selection module is configured to output the movement amount information from the acquiring module to the stroke recognition module or the stroke relative position recognition module, according to different control information;
the stroke relative position recognition module is configured to obtain stroke relative position information corresponding to the acquired movement amount information according to the corresponding relationships stored in the storage module; and
the character recognition unit is further configured to make transformation and obtain the corresponding character according to the stroke relative position information received.

8. The mobile terminal according to claim 6 or 7, **characterized in that** the acquiring module is an acceleration sensor.

9. The mobile terminal according to claim 8, **characterized in that** the acceleration sensor is placed at edges and corners of the mobile terminal.

10. The mobile terminal according to claim 7, **characterized in that** the selection module is a key-press, wherein pressing or releasing the key-press indicates different control information.

11. A method for realizing spatial writing, **characterized by** presetting a corresponding relationship between movement amount information and stroke information, and the method further comprising:
obtaining movement amount information of a mobile terminal, and then obtaining stroke information according to the preset corresponding relationship and the obtained movement amount information; and
performing character recognition using the obtained stroke information.

12. The method according to claim 11, **characterized in that** the preset corresponding relationship further comprises corresponding relationship between the movement amount information and stroke relative position information, and the method further comprises:
obtaining stroke relative position information according to the preset corresponding relationship and the obtained movement amount information; and further performing character recognition using the obtained stroke relative position information.

13. The method according to claim 11 or 12, **characterized in that** the movement amount information represents the variation of an acceleration value within a period of time.
